# EUROPÄISCHE PATENTSCHRIFT

(11) **EP 0 895 079 B1**
(45) Veröffentlichungstag und Bekanntmachung des Hinweises auf die Patenterteilung: **17.01.2001**
(21) Anmeldenummer: 98109330.5
(22) Anmeldetag: 22.05.1998
(51) Int. Cl.: G01N 31/16, G01N 35/08, B01D 53/50

(54) **Verfahren zum Messen des CaCO3-Gehaltes einer Waschsuspension, insbesondere aus dem Absorber einer Rauchgasentschwefelungsanlage**
Method for determining the concentration of CaCO3 in wash suspensions from a flue gas desulphurisation plant
Procédé pour la détermination de la teneur en CaCO3 des solutions de lavage dans une installation de désulfurisation de fumée

(30) Priorität: 01.08.1997 DE 19733284
(43) Veröffentlichungstag der Anmeldung: 03.02.1999
(73) Patentinhaber: Lurgi Lentjes Bischoff GmbH, 45136 Essen (DE)
(72) Erfinder: Risse, Theo, Dipl.-Phys., 59368 Werne (DE)
(74) Vertreter: Albrecht, Rainer Harald, Dr.-Ing.

(56) Entgegenhaltungen:
- EP-A- 0 456 042
- JP-A- 9 101 296
- US-A- 3 192 017
- US-A- 3 915 644

## Beschreibung

Die Erfindung betrifft ein Verfahren zum Messen des CaCO₃-Gehaltes einer Waschsuspension, insbesondere aus dem Absorber einer Rauchgasentschwefelungsanlage.

Bei Rauchgasentschwefelungsanlagen, in denen Kalkstein als Absorbens eingesetzt wird, wird der CaCO₃-Gehalt der aus dem Sumpf des Absorbers abgezogenen Suspension gemessen. Nach Maßgabe dieses Meßwertes wird die Kalksteindosierung, also die Zugabe von frischem Kalkstein, bemessen. In der Praxis werden Proben entnommen und im Labor Wasseranalysen durchgeführt. Das ist aufwendig, und die Abstände zwischen den einzelnen Messungen sind aufgrund der aufwendigen Analytik lang.

Angestrebt wird ein automatisierbares Meßverfahren, welches in kurzen Zeitabständen Meßwerte liefert. Aus DE-C 38 09 379 ist ein kontinuierliches Verfahren bekannt, bei dem einem aus der Anlage abgezweigten Meßstrom Säure zugegeben wird. Durch die Zugabe der Säure wird CO₂ ausgetrieben. Der CO₂-Partialwert wird gemessen und ist ein Maß für die CaCO₃-Konzentration. Bei einer Weiterentwicklung dieses Verfahrens, die aus der Patentanmeldung EP-A-0456042 bekannt ist, wird der Druck des entstehenden CO₂-Gases in der Zeiteinheit als Maß der Reaktionsgeschwindigkeit gemessen. Aus den so gewonnenen Druckwerten läßt sich der Carbonatgehalt errechnen. Ein weiteres Verfahren ist ebenfalls aus PATENT ABSTRACTS OF JAPAN, Bd. 97, Nr. 8; &JP-A-09101296 bekannt, wobei ein vorgegebener, konstanter Meßstrom im By-Pass kontinuierlich unter Zugabe von Säure einer Meßeinrichtung zugeführt wird. Die Meßeinrichtung besteht aus einer pH-Elektrode und einem Sensor zur Messung der Konzentration von gelöstem Kohlendioxid. Aus dem pH-Wert und der CO₂-Konzentration ergibt sich der Carbonatgehalt. Genauigkeit und Empfindlichkeit der bekannten Verfahren sind verbesserungsbedürftig.

Der Erfindung liegt die Aufgabe zugrunde, ein insbesondere für Rauchgasentschwefelungsanlagen geeignetes Meßverfahren anzugeben, das automatisierbar ist und eine ständige, für die betriebliche Praxis ausreichend genaue Messung der CaCO₃-Konzentration in der Waschsuspension ermöglicht. Gegenstand der Erfindung und Lösung dieser Aufgabe ist ein Meßverfahren, bei dem
ein vorgegebener, konstanter Meßstrom im By-Pass kontinuierlich einer pH-Meßeinrichtung zugeführt und der pH-Wert der Suspension gemessen wird,
der Meßstrom in zeitlichen Abständen an einer Impfstelle vor der pH-Meßeinrichtung mit Säure geimpft und die durch die Säureimpfung resultierende Änderung des pH-Wertes gemessen wird,
wobei aus der Differenz der pH-Meßwerte durch Vergleich mit Daten aus Referenzmessungen, die unter Berücksichtigung der Verweilzeit der Suspension für den Strömungsweg zwischen der Impfstelle und der pH-Meßeinrichtung erstellt worden sind, der CaCO₃-Gehalt der Suspension ermittelt wird.

Durch Säurezugabe sinkt der pH-Wert der Waschsuspension. Die Erfindung beruht auf der Erkenntnis, daß der Gradient des pH-Abfalls eine Funktion des in der Suspension vorhandenen CaCO₃-Gehaltes ist. Die Abnahme des pH-Wertes innerhalb einer vorgegebenen Zeit ist um so größer, je größer die CaCO₃-Konzentration der Waschsuspension ist. Die Abhängigkeit des CaCO₃-Gehaltes von dem Gradient, mit der der pH-Wert bei Säurezugabe abfällt, ist signifikant und wird erfindungsgemäß zur Messung der CaCO₃-Konzentration genutzt. Die Verweilzeit, in welcher der Meßstrom den Weg von der Impfstelle bis zur pH-Meßeinrichtung zurücklegt, bestimmt das Zeitintervall, in dem der pH-Wert abnimmt. Je größer die Verweilzeit ist, desto größer ist die pH-Differenz. Die bei der Messung nutzbare Verweilzeit kann durch die Länge des Strömungsweges zwischen Impfstelle und pH-Meßeinrichtung sowie die Strömungsgeschwindigkeit innerhalb der Leitung in geeigneter Weise festgelegt werden. Gute Ergebnisse resultieren, wenn eine Verweilzeit zwischen 30 und 90 Sekunden eingestellt wird.

Die Referenzmessungen können mit Eichsuspensionen im kontinuierlichen Betrieb festgelegt werden. Gemäß einer bevorzugten Ausführung der Erfindung werden für die Referenzmessungen Eichsuspensionen mit definiert eingestellten CaCO₃-Konzentrationen in einem Rührbehälter mit Säure geimpft und wird der mit der Impfung zum Zeitpunkt t = 0 einsetzende Abfall des pH-Wertes in Abhängigkeit der Zeit gemessen. Aus den Meßwerten wird eine Funktion

F (CaCO₃, ΔpH, t₁)

erstellt, welche die CaCO₃-Konzentration der Eichsuspension dem Abfall des pH-Wertes ΔpH zu einem fest vorgegebenen Zeitpunkt t₁ zuordnet. Der Zeitpunkt t₁ wird so gewählt, daß er der Verweilzeit entspricht, in welcher der Meßstrom den Weg von der Impfstelle bis zur pH-Meßeinrichtung zurücklegt. Die Referenzmessungen können im Labor in einfachen Apparaturen durchgeführt werden.

Zur Impfung des Meßstromes wird vorzugsweise eine Mineralsäure, insbesondere eine verdünnte HCl-Lösung, verwendet.

Impfen meint im Rahmen der Erfindung die Dosierung einer Säure, wobei die Säurekonzentration und der Dosiermengenstrom auf den im By-Pass geführten Suspensionsmeßstrom so abgestimmt wird, daß das Meßsignal mit üblichen pH-Meßeinrichtungen ausgewertet werden kann. Vorzugsweise wird die Säure über einen Meßzeitraum, der länger ist als die Verweilzeit, in welcher der Meßstrom den Weg von der Impfstelle bis zur pH-Meßeinrichtung zurücklegt, kontinuierlich mit einem konstanten Volumenstrom dem Meßstrom aufgegeben. In den Strömungsweg zwischen der Impfstelle und der pH-Meßeinrichtung können verweilzeitvergrößernde Strömungsräume, vorzugsweise in Form von Rohrschlangen oder Rohrbündeln aus parallel durchströmten Rohren, eingeschaltet sein. Als Strömungsräume können auch durchströmte Rührbehälter u. dgl. eingesetzt werden.

Um die Meßgenauigkeit und Meßsicherheit zu verbessern, lehrt die Erfindung in weiterer Ausgestaltung, daß der Meßstrom durch mehrere, mit Abstand in Strömungsrichtung hintereinander angeordnete pH-Meßeinrichtungen geführt wird, nach einer Säuredosierung an der Impfstelle jeweils der Abfall des pH-Wertes an den Meßstellen gemessen und durch Vergleich mit Daten aus Referenzmessungen, die unter Berücksichtigung der von Meßstelle zu Meßstelle unterschiedlichen Verweilzeit für den Strömungsweg von der Impfstelle bis zur Meßeinrichtung erstellt worden sind, Werte für die CaCO₃-Konzentration ermittelt werden und schließlich daraus ein Mittelwert berechnet wird.

Im folgenden wird die Erfindung anhand einer lediglich ein Ausführungsbeispiel darstellenden Zeichnung erläutert. Es zeigen schematisch
- Fig. 1: eine Meßanordnung zum Messen des CaCO₃-Gehaltes einer in einer Rauchgasentschwefelungsanlage eingesetzten Waschsuspension,
- Fig. 2: den an einer pH-Meßeinrichtung der Meßanordnung gemessenen Verlauf des pH-Wertes nach einer Säureimpfung des Meßstromes, und
- Fig. 3: die Abhängigkeit zwischen der CaCO₃-Konzentration der Suspension und dem gemessenen Abfall des pH-Wertes nach einer Säureimpfung.

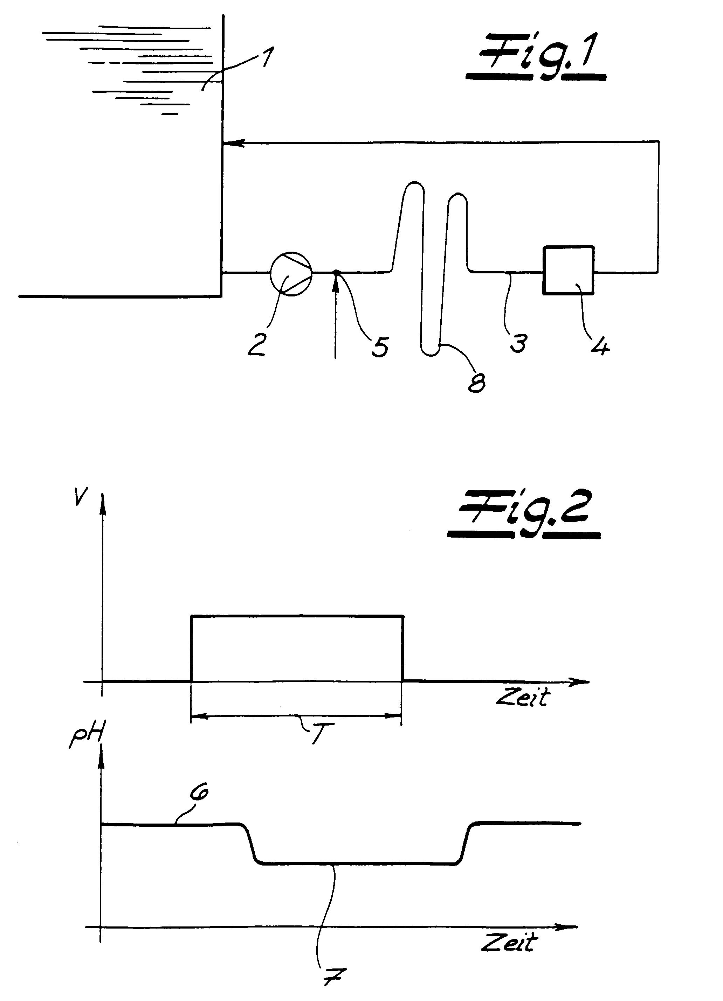

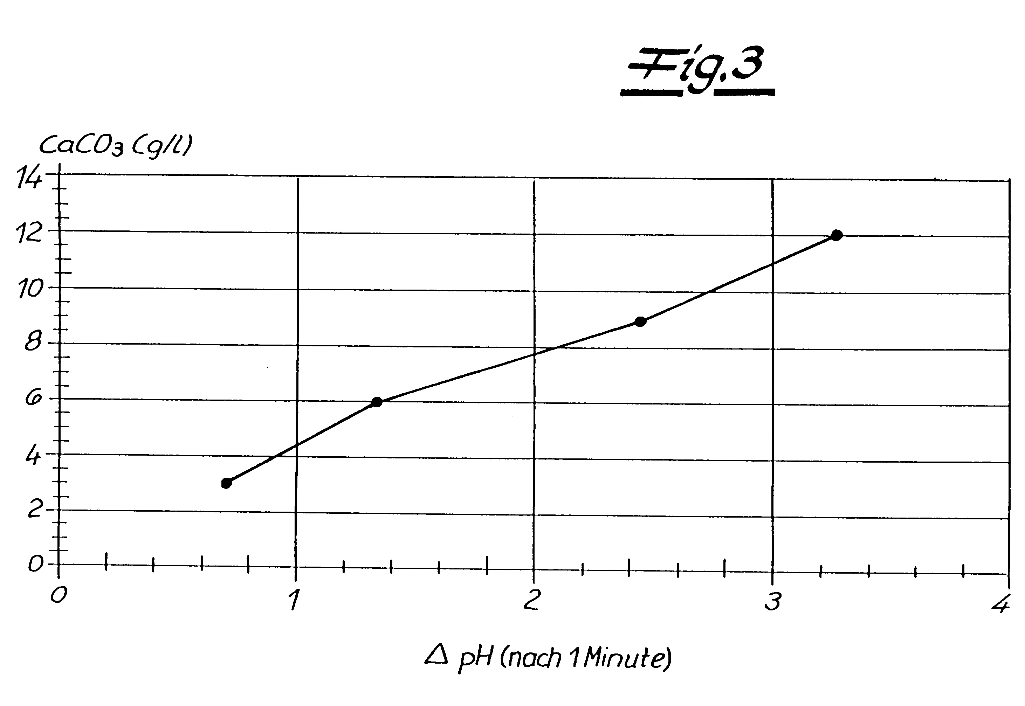

Aus dem Absorber 1 einer Rauchgasentschwefelungsanlage wird ein vorgegebener, konstanter Meßstrom mittels einer Dosierpumpe 2 durch eine By-Pass-Leitung 3 kontinuierlich einer pH-Meßeinrichtung 4 zugeführt und wird der pH-Wert der Suspension, im folgenden auch Ausgangs-pH-Wert genannt, gemessen. Von Zeit zu Zeit wird der kontinuierlich durch die By-Pass-Leitung 3 geführte Meßstrom an einer Impfstelle 5 vor der pH-Meßeinrichtung 4 mit einer Säure, vorzugsweise einer wäßrigen HCl-Lösung, geimpft. Das Impfen besteht darin, daß die Säure über einen Meßzeitraum T, der länger ist als die Verweilzeit, in welcher der Meßstrom den Weg von der Impfstelle 5 bis zur pH-Meßeinrichtung 4 zurücklegt, kontinuierlich mit einem konstanten Volumenstrom V dem Meßstrom aufgegeben wird. Durch die Säurezugabe sinkt der pH-Wert im Meßstrom. An der pH-Meßeinrichtung 4 wird der in Fig. 2 dargestellte pH-Wert-Verlauf gemessen. Die Differenz ΔpH zwischen dem Ausgangs-pH-Wert 6 und dem nach der Säureimpfung an der pH-Meßeinrichtung gemessenen pH-Wert 7 ist ein Maß für den CaCO₃-Gehalt der Waschsuspension. Durch Vergleich mit Daten aus Referenzmessungen, die unter Berücksichtigung der Verweilzeit für den Strömungsweg zwischen der Impfstelle 5 und der pH-Meßeinrichtung 4 erstellt worden sind, wird der CaCO₃-Gehalt der Suspension ermittelt.

Für die Referenzmessungen werden Eichsuspensionen mit definiert eingestellten CaC03-Konzentrationen in einem Rührbehälter mit Säure, z.B. HCl-Lösung, geimpft. Der mit der Impfung zum Zeitpunkt t = 0 einsetzende Abfall des pH-Wertes wird in Abhängigkeit der Zeit gemessen. Aus den Meßwerten wird dann eine Funktion

F (CaCO₃, ΔpH, t₁)

erstellt, welche die CaCO₃-Konzentration der Eichsuspension dem Abfall des pH-Wertes ΔpH zu einem fest vorgegebenen Zeitpunkt t₁ zuordnet. In Fig. 3 ist diese Abhängigkeit dargestellt. Es ist erkennbar, daß eine annähernd lineare Abhängigkeit zwischen der CaCO₃-Konzentration und der pH-Differenz ΔpH besteht. Der Zeitpunkt t₁ wird so festgelegt, daß er der Verweilzeit entspricht, in welcher der Meßstrom den Weg von der Impfstelle 5 bis zur pH-Meßeinrichtung 4 zurücklegt.

Im Ausführungsbeispiel der Fig. 3 wurde 100 cm³ HCl-Lösung (Konzentration 0,1 mol/l) mit einer Suspensionsmenge von 70 cm³ vermischt, wobei die CaCO₃-Konzentration der Suspension zwischen 3 und 12 g/l variierte. Unter ständigem Rühren wurde der Abfall des pH-Wertes gegenüber dem Ausgangs-pH-Wert 6 gemessen und die sich nach einer Minute einstellende Differenz ΔpH (t₁ = 1 Minute) in Abhängigkeit der CaCO₃-Konzentration aufgetragen. Der Fig. 3 ist zu entnehmen, daß die Abnahme des pH-Wertes innerhalb einer Minute um so größer ist, je größer die CaCO₃-Konzentration der Suspension ist.

Bei der Anwendung des Meßverfahrens muß gewährleistet sein, daß die Verweilzeit, in welcher der Meßstrom den Weg von der Impfstelle 5 bis zur pH-Meßeinrichtung 4 zurücklegt, genauso groß ist wie das Zeitintervall (t = 0, t₁), welches der Erstellung der Funktion F (CaCO₃, ΔpH, t₁) zugrundegelegt wurde. Die Verweilzeit ist einstellbar durch die Strömungsgeschwindigkeit des Meßstromes auf dem Wege zwischen der Impfstelle 5 bis zur pH-Meßeinrichtung 4 sowie durch die Länge des Strömungsweges. In den Strömungsweg zwischen der Impfstelle 5 und der pH-Meßeinrichtung 4 können verweilzeitvergrößernde Strömungsräume, z.B. in Form von Rohrschlangen 8 u. dgl., eingeschaltet sein. Es hat sich bewährt, wenn die Verweilzeit zwischen Impfstelle und pH-Meßeinrichtung zwischen 30 und 90 Sekunden liegt.

Im Rahmen der Erfindung liegt es auch, daß der Meßstrom durch mehrere, mit Abstand in Strömungsrichtung hintereinander angeordnete pH-Meßeinrichtungen geführt wird. Nach einer Säuredosierung an der Impfstelle wird der Abfall des pH-Wertes an allen Meßstellen gemessen und werden durch Vergleich mit Daten aus Referenzmessungen Werte für die CaCO₃-Konzentration ermittelt. Die Verweilzeit für den Strömungsweg von der Impfstelle bis zur Meßeinrichtung ist von pH-Meßeinrichtung zu pH-Meßeinrichtung unterschiedlich. Das muß bei der Erstellung der jeweiligen Referenzmessungen berücksichtigt werden. Aus den Konzentrationsmeßwerten wird dann durch Mittelwertbildung die CaCO₃-Konzentration berechnet.

## Patentansprüche

1. Verfahren zum Messen des CaCO₃-Gehaltes einer Waschsuspension, insbesondere aus dem Absorber (1) einer Rauchgasentschwefelungsanlage, bei dem
ein vorgegebener, konstanter Meßstrom im By-Pass (3) kontinuierlich einer pH-Meßeinrichtung (4) zugeführt und der pH-Wert der Suspension gemessen wird,
dadurch gekennzeichnet, daß
der Meßstrom in zeitlichen Abständen an einer Impfstelle (5) vor der pH-Meßeinrichtung mit einer Säure geimpft und die durch die Säureimpfung resultierende Änderung des pH-Wertes gemessen wird,
wobei aus der Differenz der pH-Meßwerte durch Vergleich mit Daten aus Referenzmessungen, die unter Berücksichtigung der Verweilzeit der Suspension für den Strömungsweg zwischen der Impfstelle und der pH-Meßeinrichtung erstellt worden sind, der CaCO₃-Gehalt der Suspension ermittelt wird.

2. Verfahren nach Anspruch 1, wobei für die Referenzmessungen Eichsuspensionen mit definiert eingestellten CaCO₃-Konzentrationen in einem Rührbehälter mit Säure geimpft werden und der mit der Impfung zum Zeitpunkt t = 0 einsetzende Abfall des pH-Wertes in Abhängigkeit der Zeit gemessen wird, wobei aus den Meßwerten eine Funktion
F (CaCO₃, ΔpH, t₁)
erstellt wird, welche die CaCO₃-Konzentration der Eichsuspension dem Abfall des pH-Wertes ΔpH zu einem fest vorgegebenen Zeitpunkt t₁ zuordnet, wobei der Zeitpunkt t₁ der Verweilzeit entspricht, in welcher der Meßstrom den Weg von der Impfstelle bis zur pH-Meßeinrichtung zurücklegt.

3. Verfahren nach Anspruch 1, wobei zur Impfung des Meßstromes eine Mineralsäure, vorzugsweise eine verdünnte HCl-Lösung, verwendet wird.

4. Verfahren nach einem der Ansprüche 1 bis 3, wobei die Mineralsäure über einen Meßzeitraum, der länger ist als die Verweilzeit, in welcher der Meßstrom den Weg von der Impfstelle bis zur pH-Meßeinrichtung zurücklegt, kontinuierlich mit einem konstanten Volumenstrom dem Meßstrom aufgegeben wird.

5. Verfahren nach einem der Ansprüche 1 bis 4, wobei in den Strömungsweg zwischen der Impfstelle und der pH-Meßeinrichtung verweilzeitvergrößernde Strömungsräume, vorzugsweise in Form von Rohrschlangen oder Rohrbündeln aus parallel durchströmten Rohren, eingeschaltet sind.

6. Verfahren nach einem der Ansprüche 1 bis 5, wobei der Meßstrom durch mehrere, mit Abstand in Strömungsrichtung hintereinander angeordnete pH-Meßeinrichtungen geführt wird, nach einer Säuredosierung an der Impfstelle jeweils der Abfall des pH-Wertes an den Meßstellen gemessen und durch Vergleich mit Daten aus Referenzmessungen, die unter Berücksichtigung der von Meßstelle zu Meßstelle unterschiedlichen Verweilzeit für den Strömungsweg von der Impfstelle bis zur Meßeinrichtung erstellt worden sind, Werte für die CaCO₃-Konzentration ermittelt werden und daraus ein Mittelwert berechnet wird.

## Claims

1. A method of measuring the CaCO₃ content of a scrubbing suspension, particularly from the absorber (1) of a flue gas desulphurisation installation, wherein
a predetermined, constant measuring stream in a by-pass (3) is continuously fed to a pH measuring device (4) and the pH of the suspension is measured,
characterised in that
the measuring stream is inoculated with an acid at chronological intervals at an inoculation point (5) upstream of the pH measuring device and the change in pH resulting from the acid inoculation is measured,
wherein the CaCO₃ content of the suspension is determined from the difference of the pH readings by comparison with data from reference measurements which have been obtained taking into account the dwell time of the suspension for the flow path between the inoculation point and the pH measuring device.

2. A method according to claim 1, wherein calibration suspensions with defined, set CaCO₃ concentrations are inoculated with acid in a stirred vessel for the reference measurements and the drop in pH which occurs with the inoculation at time t = 0 is measured as a function of time, wherein a function
F (CaCO₃, ΔpH, t₁)
is obtained from the measured values, which function relates the CaCO₃ concentration of the calibration suspension to the drop in pH, namely to ΔpH, at a fixedly predetermined time t₁, wherein the time t₁ corresponds to the dwell time within which the measuring stream covers the path from the inoculation point to the pH measuring device.

3. A method according to claim 1, wherein a mineral acid, preferably a dilute HCl solution, is used for inoculating the measuring stream.

4. A method according to any one of claims 1 to 3, wherein the mineral acid is continuously added at a constant volume flow to the measuring stream over a measuring interval which is longer than the dwell time within which the measuring stream covers the path from the inoculation point to the pH measuring device.

5. A method according to any one of claims 1 to 4, wherein flow spaces which increase the dwell time, preferably in the form of tube coils or tube bundles comprising tubes through which flow occurs in parallel, are inserted in the flow path between the inoculation point and the pH measuring device.

6. A method according to any one of claims 1 to 5, wherein the measuring stream is passed through a plurality of pH measuring devices disposed at intervals in succession in the direction of flow, the drop in pH at each of the measuring points is measured after the metered addition of acid at the inoculation point and values of the CaCO₃ concentration are determined by comparison with data from reference measurements which are obtained taking into account the dwell time, which differs from measuring point to measuring point, for the flow path from the inoculation point to the measuring device, and a mean value is calculated therefrom.

## Revendications

1. Procédé de mesure de la teneur en CaCO₃ d'une suspension de lavage, notamment issue de l'absorbeur (1) d'une installation de désulfuration des gaz de fumée, dans lequel
un courant de mesure constant prédéfini est continuellement acheminé par bipasse (3) vers un dispositif de mesure du pH (4) et dans lequel le pH de la suspension est mesuré,
**caractérisé par le fait** que
un acide est inoculé de temps en temps au courant de mesure à un point d'inoculation (5) en amont du dispositif de mesure du pH et que la modification du pH résultant de l'inoculation de l'acide est mesurée,
la teneur en CaCO₃ de la suspension étant déterminée à partir de la différence entre les valeurs de pH mesurées, par comparaison avec des données fournies par des mesures de référence, qui ont été faites en tenant compte du temps de séjour de la suspension pour le parcours d'écoulement entre le point d'inoculation et le dispositif de mesure du pH.

2. Procédé selon la revendication 1, dans lequel, pour les mesures de référence, un acide est inoculé dans un récipient mélangeur à des suspensions d'étalonnage de concentrations en CaCO₃ définies et dans lequel la baisse du pH commençant au moment de l'inoculation t = 0 est mesurée en fonction du temps, une fonction
F (CaCO₃, ΔpH, t₁)
étant élaborée à partir des valeurs mesurées, fonction qui affecte la concentration en CaCO₃ de la suspension d'étalonnage à la baisse de la valeur du pH ΔpH à un moment t1 prédéfini, le moment t1 correspondant au temps de séjour pendant lequel le courant de mesure parcourt la distance entre le point d'inoculation et le dispositif de mesure du pH.

3. Procédé selon la revendication 1, dans lequel on utilise pour l'inoculation du courant de mesure un acide minéral, de préférence une solution diluée de HCl.

4. Procédé selon une des revendications 1 à 3, dans lequel l'acide minéral est ajouté continuellement au courant de mesure avec un débit volumique constant pendant une période de mesure qui est plus longue que le temps de séjour pendant lequel le courant de mesure parcourt la distance entre le point d'inoculation et le dispositif de mesure du pH.

5. Procédé selon une des revendications 1 à 4, des espaces d'écoulement augmentant le temps de séjour, de préférence sous forme de serpentins ou de faisceaux de tubes parcourus parallèlement par le courant, sont insérés dans le parcours d'écoulement entre le point d'inoculation et le dispositif de mesure du pH.

6. Procédé selon une des revendications 1 à 5, le courant de mesure étant dirigé à travers plusieurs dispositifs de mesure du pH disposés de façon espacée les uns derrière les autres dans le sens d'écoulement, la baisse du pH étant mesurée au niveau des points de mesure après un dosage d'acide au point d'inoculation et les valeurs de la concentration en CaCO₃ étant déterminées par comparaison avec des données fournies par des mesures de référence, qui ont été faites en tenant compte du temps de séjour différent de point de mesure à point de mesure pour le parcours d'écoulement entre le point d'inoculation et dispositif de mesure du pH et une moyenne étant déterminée à partir de ces valeurs.
